# EUROPÄISCHE PATENTSCHRIFT

(11) **EP 3 784 490 B1**
(45) Veröffentlichungstag und Bekanntmachung des Hinweises auf die Patenterteilung: **11.09.2024**
(21) Anmeldenummer: 19717917.9
(22) Anmeldetag: 17.04.2019
(51) Int. Cl.: B32B 17/10

(54) **VERBUNDSCHEIBE MIT ELEKTRISCH SCHALTBAREM FUNKTIONSELEMENT IN THERMOPLASTISCHER ZWISCHENSCHICHT**
COMPOSITE PANE HAVING AN ELECTRICALLY SWITCHABLE FUNCTIONAL ELEMENT IN A THERMOPLASTIC INTERMEDIATE LAYER
VITRE FEUILLETÉE MUNIE D'UN ÉLÉMENT FONCTIONNEL À COMMANDE ÉLECTRIQUE DANS UNE COUCHE INTERMÉDIAIRE THERMOPLASTIQUE

(30) Priorität: 25.04.2018 EP 18169154
(43) Veröffentlichungstag der Anmeldung: 03.03.2021
(73) Patentinhaber: Saint-Gobain Glass France, 92400 Courbevoie (FR)
(72) Erfinder: WEBER, Patrick, 52477 Alsdorf (DE); KIZMAZ, Ali-Osman, 52146 Würselen (DE); BORHANI HAGHIGHI, Sara, 52070 Aachen (DE); YATIM, Alexandra, 52070 Aachen (DE)
(74) Vertreter: Gebauer, Dieter Edmund
(86) Internationale Anmeldenummer: PCT/EP2019/059969
(87) Internationale Veröffentlichungsnummer: WO 2019/206772

(56) Entgegenhaltungen:
- WO-A1-2014/174310
- WO-A1-2016/116372
- WO-A1-2017/077133
- WO-A1-2018/010865
- US-A1- 2015 367 782

## Beschreibung

Die Erfindung betrifft eine Verbundscheibe mit einem in der thermoplastischen Zwischenschicht der Verbundscheibe eingelassenen elektrisch schaltbarem Funktionselement, ein Verfahren zur Herstellung der Verbundscheibe, sowie die Verwendung der Verbundscheibe als Kraftfahrzeugscheibe.

Moderne Verglasungssysteme sind mit den verschiedensten elektrisch steuerbaren Funktionselementen, wie Sensoren, Detektoren oder Empfangseinheiten ausgestattet. Als Beispiele derartiger Funktionselemente sind insbesondere im Automobilbereich Regensensoren, Antennen und kapazitive Berührungssensoren zu nennen. Diese Funktionselemente sollen in der Regel für den Betrachter möglichst unauffällig und, sofern optisch wahrnehmbar, möglichst ansprechend gestaltet sein. Gleichzeitig sind die Bauteile gegenüber Witterungs- und Umwelteinflüssen zu schützen.

EP 2 462 007 B1 beschreibt eine Verbundscheibe mit einem optisch transparenten Sensorfeld und einem im Bereich des Sensorfeldes angebrachten Sensor. Der Sensor befindet sich innerhalb einer Einkapselung, die in den Fahrgastraum eines Kraftfahrzeugs ragt. Diese Einkapselung ist im Fahrgastraum als Erhebung auf der Scheibe sichtbar und wird vom Fahrzeugführer als möglicherweise störend und das Sichtfeld einschränkend empfunden.

Je nach Art und Größe der benötigten Sensoren können diese auch im Laminat der Verbundscheibe eingebracht sein. So ist aus WO 2017/097536 ein Lichtsensor bekannt, der eine Photodiode und eine Leiterplatte umfasst und zwischen einer Glasscheibe und der dieser benachbarten thermoplastischen Zwischenschicht der laminierten Verbundscheibe eingebracht ist. Die Leiterplatte der Photodiode weist dabei keine Haftung zum benachbarten Glas auf, wodurch optisch erkennbare Lufteinschlüsse zwischen diesen Schichten verbleiben. Dies kann mittels eines opaken Abdeckdrucks kaschiert werden.

WO 2016/116372 offenbart eine Verbundscheibe mit Berührungssensor in Form eines kapazitiven Schaltbereichs zur Steuerung beliebiger elektrischer Verbraucher im Fahrzeug, wie beispielsweise optisch aktiver schaltbarer Verglasungen. Der kapazitive Sensor umfasst eine strukturierte elektrisch leitfähige Schicht auf einer Trägerfolie. Die Trägerfolie ist zwischen zwei thermoplastischen Zwischenschichten der Verbundscheibe eingelegt. Bei einem solchen symmetrischen Aufbau ist jedoch sicherzustellen, dass der Sensor nur selektiv von einer Scheibenoberfläche der Verbundscheibe schaltbar ist. Um die Selektivität zu verbessern kann die Dicke der thermoplastischen Zwischenschicht auf der Seite, an der keine Schaltbarkeit der Sensorfläche erwünscht ist, durch Zwischenlage einer weiteren Materiallage der Zwischenschicht erhöht werden. Diese weitere Lage der thermoplastischen Zwischenschicht wird im Wesentlichen vollflächig in den Scheibenverbund eingebracht um die lokalen Dickenunterschiede im Bereich des Sensors möglichst gering zu halten.

Funktionselemente für elektrisch schaltbare Verglasungen, wie PDLC- oder SPD-Elemente, werden in der Regel über zwei thermoplastische Verbundfolien gleicher Dicke in einer Verbundscheibe einlaminiert. Um den Dickenunterschied zwischen Bereichen mit Funktionselement und Bereichen ohne Funktionselement auszugleichen, kann gemäß WO 2007/122428 A1 eine thermoplastische Rahmenfolie verwendet werden, die zwischen den beiden thermoplastischen Verbundfolien (auch als Laminierfolien bezeichnet) eingelegt ist und das Funktionselement entlang seiner umlaufenden Kante rahmenförmig umgibt. Beispielsweise werden in WO 2007/122428 A1 zwei thermoplastische Verbundfolien aus PVB mit einer Dicke von 0,76 mm und eine Rahmenfolie aus PVB mit einer Dicke von 0,38 mm verwendet um ein SPD-Element in eine Verbundscheibe zu integrieren. WO 2007/122429 A1 beschreibt den genannten Aufbau für flüssigkristallbasierte Funktionselemente. Durch den flächigen Einsatz der thermoplastischen Verbundfolien und der ebenfalls großflächigen Rahmenfolie wird eine unvorteilhaft große Dicke der Verbundscheibe erreicht.

US 2015/0165965 A1 offenbart eine Verbundscheibe umfassend ein SPD-Funktionselement und eine Diode, die in der thermoplastischen Zwischenschicht der Verbundscheibe eingelagert sind. Dazu wird ein vielschichtiger Aufbau der Zwischenschicht umfassend mehrere Rahmenfolien benötigt.

US 2016/0313587 A1 beschreibt eine Verbundscheibe mit einem darin einlaminierten Funktionselement, wobei mehrere thermoplastische Verbundfolien mit einer Dicke von jeweils 0,76 mm, 0,38 mm sowie einer Kombination dieser beiden Dicken verwendet werden.

In WO 2018/041472 A1 ist eine Windschutzscheibe für ein Head-Up-Display beschrieben, die mit einer infrarotreflektierenden Beschichtung auf einer Polyesterfolie ausgestattet ist, wobei die Polyesterfolie zwischen zwei thermoplastischen Verbundfolien unterschiedlicher Dicke eingelegt ist. Die Dicken der Innenscheibe und der thermoplastischen Verbundfolien sind so gewählt, dass die Distanz zwischen infrarotreflektierender Beschichtung und Außenseite der Innenscheibe im Vergleich zu den üblichen Abmaßen reduziert ist. Auf diese Weise wird eine verbesserte Überlappung der Primärreflektion und der Schichtreflektion des HUD-Bildes gewährleistet. Die thermoplastischen Verbundfolien sowie die Polyesterfolie sind vollflächig in die Verbundscheibe eingelegt.

WO 2018/010865 A1 offenbart eine Verbundscheibe umfassend eine thermoplastische Zwischenschicht aus zwei thermoplastischen Verbundfolien unterschiedlicher Dicke und einer zwischen den Verbundfolien eingelegten Polyesterfolie, sowie ein Verfahren zur Herstellung einer solchen Verbundscheibe. Insbesondere werden thermoplastische Zwischenschichten aus einer dicken Verbundfolie (PVB), einer dünneren Verbundfolie (PVB) und einer dazwischen eingelegten Polyesterfolie verwendet. Die Verbundfolie geringerer Dicke bietet den Vorteil, dass diese während des Herstellungsverfahrens leichter kurzfristig ablösbar ist um einen selektiven Rückschnitt der Polyesterfolie zu ermöglichen. Die thermoplastischen Verbundfolien sowie die Polyesterfolie werden vollflächig in die Verbundscheibe eingelegt.

WO 2014/174310 A1 offenbart eine Verbundscheibe mit einer SPD-Folie sowie eine erste Laminierfolie und eine zweite Laminierfolie, wobei die zweite Laminierfolie mit einem Überstand von weniger als 30 mm relativ zur SPD-Folie ausgebildet ist.

Die Aufgabe der vorliegenden Erfindung ist es, eine Verbundscheibe mit in der thermoplastischen Zwischenschicht laminiertem elektrisch schaltbarem Funktionselement bereitzustellen, wobei das Funktionselement optisch unauffällig in den Folienverbund integriert ist. Des Weiteren ist es Aufgabe der Erfindung ein Verfahren zur Herstellung einer solchen Verbundscheibe zur Verfügung zu stellen.

Die Aufgabe der vorliegenden Erfindung wird erfindungsgemäß durch eine Verbundscheibe mit einem in der thermoplastischen Zwischenschicht eingelegten elektrisch schaltbaren Funktionselement gemäß dem unabhängigen Anspruch 1 gelöst. Bevorzugte Ausführungen gehen aus den Unteransprüchen hervor.

Die erfindungsgemäße Verbundscheibe mit mindestens einem elektrisch schaltbaren Funktionselement umfasst mindestens eine erste Scheibe, eine zweite Scheibe und eine thermoplastische Zwischenschicht, die die erste Scheibe mit der zweiten Scheibe verbindet.

Die thermoplastische Zwischenschicht umfasst dabei eine erste Laminierfolie mit einer Dicke von mindestens 0,3 mm und eine oder mehrere zweite Laminierfolien mit einer Dicke von jeweils höchstens 70 µm. Die erste Laminierfolie dient dabei der flächigen Verbindung der ersten Scheibe und der zweiten Scheibe zu einer Verbundscheibe. Die zweiten Laminierfolien sind hingegen zur optisch ansprechenden Integration des Funktionselementes wichtig. Im Bereich des elektrisch schaltbaren Funktionselementes liegt dabei eine unmittelbare Schichtenabfolge von erster Scheibe, erster Laminierfolie, zweiter Laminierfolie, elektrisch schaltbarem Funktionselement, optional einer weiteren zweiten Laminierfolie und abschließend der zweiten Scheibe vor. Das Funktionselement ist somit über eine zweite Laminierfolie mit der benachbarten ersten Scheibe verbunden. Zwischen Funktionselement und zweiter Scheibe befindet sich in einer möglichen Ausführungsform lediglich die erste Laminierfolie. In einer anderen möglichen Ausführungsform ist benachbart zum Funktionselement eine weitere zweite Laminierfolie eingelegt, so dass die Anbindung des Funktionselements an die zweite Scheibe über eine zweite Laminierfolie und die darauffolgende erste Laminierfolie erfolgt. Die zweiten Laminierfolien befinden sich ausschließlich im Bereich des Funktionselementes beziehungsweise der Funktionselemente und ragen mit einem Überstand x von mindestens 1 mm und maximal 10 mm über die äußeren Kanten des Funktionselementes hinaus. Somit wird der Aufbau der thermoplastischen Zwischenschicht außerhalb des Funktionselementes nicht beeinflusst. Die beschriebene Schichtabfolge wird erfindungsgemäß mit Funktionselementen realisiert, die eine Dicke von maximal 200 µm und einen Anteil an der Gesamtfläche der Verglasung von unter 10 % aufweisen.

Die Erfinder konnten feststellen, dass der erfindungsgemäße Schichtaufbau insbesondere geeignet ist um Funktionselemente zu integrieren, die entsprechend lokal begrenzt sind und eine geringe Dicke aufweisen. Es zeigt sich in diesem Fall, dass bei Einsatz der erfindungsgemäß dünnen zweiten Laminierfolien im Bereich des Funktionselementes nur geringe zusätzliche lokale Spannungen im Glas auftreten und gleichzeitig eine optisch ansprechende Kantenerscheinung erreicht werden kann.

Der erfindungsgemäße Schichtaufbau mit nur lokal begrenzten zweiten Laminierfolie ermöglicht es somit auf komplexe Aufbauten, wie beispielsweise Rahmenfolien, zu verzichten. Zumindest innerhalb des Anteils des Sichtbereichs der Verbundscheibe, der außerhalb sämtlicher Funktionselemente und außerhalb der entsprechenden Überstände x liegt, besteht somit die unmittelbare Schichtabfolge der Verbundscheibe aus der ersten Scheibe, der ersten Laminierfolie und der zweiten Scheibe. Besonders bevorzugt gilt dies für die gesamte Verbundscheibe außerhalb sämtlicher Funktionselemente und außerhalb der entsprechenden Überstände x. Die erfindungsgemäße Verbundscheibe enthält keinerlei Rahmenfolien.

Die erste Laminierfolie kann bei Bedarf aus mehreren einzelnen deckungsgleichen vollflächigen thermoplastischen Folien zusammengelegt sein. Dies ist beispielsweise vorteilhaft wenn die gewünschte Dicke der ersten Laminierfolie einem ganzzahligen Vielfachen der Dicke einer kommerziell erhältlichen Folie mit einer Standartdicke entspricht.

Die erfindungsgemäße Verbundscheibe ermöglicht ein besonders ansprechendes Erscheinungsbild des Funktionselementes, da das Funktionselement vollständig von Laminierfolien umgeben ist, die aufgrund ihrer thermoplastischen Eigenschaften eine Adhäsion zu den benachbarten Glasscheiben ermöglichen.

Wird das Funktionselement nach dem Stand der Technik unmittelbar auf eine erste Scheibe aufgelegt und unter Zwischenlage lediglich einer ersten Laminierfolie mit einer zweiten Scheibe laminiert, so besteht zu der ersten Scheibe keine Haftung. Dies ist in der laminierten Verbundscheibe in Form von Lufteinschlüssen zwischen Funktionselement und Glas erkennbar. Darüber hinaus ist der Übergang zwischen Funktionselement und benachbartem Bereich ohne Funktionselement im Laminat als deutlich erkennbare Kante sichtbar. Dieser Effekt tritt beidseitig auf, d.h. sowohl auf der Seite der ersten Scheibe als auch auf der Seite der zweiten Scheibe trotz Zwischenlage der ersten Laminierfolie.

Die Erfinder haben herausgefunden, dass die Verwendung einer lokal im Bereich des Funktionselementes eingesetzten zweiten Laminierfolie sowohl die Haftung zwischen Funktionselement und benachbarter Scheibe verbessert als auch die optisch sichtbare Kante des Funktionselementes kaschiert. Lufteinschlüsse werden somit vollständig vermieden. Auch auf einen Schwarzdruck, der die äußere Umrandung des Funktionselementes und somit die genannte Kantenerscheinung verdeckt, kann verzichtet werden. Demnach ist es möglich das Funktionselement an einer beliebigen Position innerhalb der erfindungsgemäßen Verbundscheibe anzubringen, da keine Rücksicht auf eine Sichtbeeinträchtigung durch Kantenerscheinungen oder Schwarzdruck zu nehmen ist. Auf auf komplexe Lösungswege, wie beispielsweise die Verwendung von Rahmenfolien zur Integration von Funktionselementen, kann verzichtet werden. Der Ausschnitt einer Rahmenfolie ist darüber hinaus in Reflexion sichtbar. Demgegenüber ist die erfindungsgemäße Lösung überlegen. Die erfindungsgemäße Verbundscheibe ist ferner hinsichtlich einer Gewichtsoptimierung von Verglasungen vorteilhaft. Dadurch, dass die zweiten Laminierfolien nur lokal im Bereich der Funktionselemente eingesetzt werden, ist eine Gewichtsreduktion im Vergleich zu einer Verbundscheibe mit mehreren flächigen Laminierfolien möglich. Da die zweiten Laminierfolien erfindungsgemäß eine Dicke von maximal lediglich 70 µm aufweisen, können trotz einer lokalen Dickenerhöhung der Verbundscheibe die dadurch bedingt auftretenden Spannungen geringgehalten werden. Dadurch wird eine durch zu hohe Spannungen initiierte Beschädigung der Verbundscheibe vermieden.

Die thermoplastische Zwischenschicht besteht dabei aus einer ersten Laminierfolie und einer oder mehreren zweiten Laminierfolien.

Die zweiten Laminierfolien können sowohl zwischen Funktionselement und benachbarter Scheibe, als auch zwischen Funktionselement und daran angrenzender erster Laminierfolie, in die thermoplastische Zwischenschicht eingebracht werden. Eine Positionierung zwischen Funktionselement und Scheibe führt zu einer Verbesserung der Haftung, Vermeidung von Lufteinschlüssen sowie Verbesserung der Kantenerscheinung des Funktionselements. Zwischen erster Laminierfolie und Funktionselement dient die zweite Laminierfolie lediglich zur Verbesserung der Kantenerscheinung.

In einer bevorzugten Ausführungsform der Erfindung besteht die thermoplastische Zwischenschicht aus der ersten flächig aufgebrachten Laminierfolie und zusätzlich dazu jeweils genau einer zweiten Laminierfolie pro elektrisch schaltbarem Funktionselement. Die unmittelbare Schichtenabfolge im Bereich des oder der elektrisch schaltbaren Funktionselemente lautet dabei: erste Scheibe, zweite Laminierfolie, elektrisch schaltbares Funktionselement, erste Laminierfolie und zweite Scheibe. Die zweiten Laminierfolien sind dabei lediglich lokal im Bereich der Funktionselemente zwischen diesen und der benachbarten Scheibe eingebracht. Die Anzahl der zweiten Laminierfolien entspricht der Anzahl der Funktionselemente. Als eine zweite Laminierfolie wird dabei ein zu einem Funktionselement korrespondierender Folienabschnitt definiert. Dabei könnten auch mehrere zweite Laminierfolien miteinander verbunden sein. Sofern beispielsweise zwei Funktionselemente unmittelbar nebeneinander angeordnet sind, könnte auf einen Trennschnitt zwischen den zweiten Laminierfolien dieser Funktionselemente verzichtet werden und beide Folien als ein gemeinsamer Folienabschnitt in die thermoplastische Zwischenschicht eingelegt werden. Dies gilt sowohl für zweiten Laminierfolien zwischen Funktionselement und Scheibe als auch für zweiten Laminierfolien zwischen Funktionselement und erster Laminierfolie.

In einer weiteren bevorzugten Ausführungsform der Erfindung besteht die thermoplastische Zwischenschicht aus der ersten Laminierfolie und jeweils zwei zweiten Laminierfolien pro elektrisch schaltbarem Funktionselement, das in die Zwischenschicht eingelegt ist. Die unmittelbare Schichtenabfolge im Bereich des elektrisch schaltbaren Funktionselements besteht demnach aus der ersten Scheibe, einer zweiten Laminierfolie, dem elektrisch schaltbaren Funktionselement, einer weiteren zweiten Laminierfolie, der ersten Laminierfolie und der zweiten Scheibe. Die Anzahl der zweiten Laminierfolien ergibt sich demnach als die doppelte Anzahl der Funktionselemente. Erfindungsgemäß erfolgt die Vermeidung von Luftblasen zwischen erster Scheibe und Funktionselement und einer Verbesserung der Kantenerscheinung von Seiten der ersten Scheibe. Zusätzlich dazu wird auch eine Verbesserung der Kantenerscheinung bei Durchsicht durch die Verbundscheibe von Seiten der zweiten Scheibe erzielt.

Die innenseitige Oberfläche der ersten Scheibe des erfindungsgemäßen Verbundglases (oder Verbundscheibe) ist die in Richtung der thermoplastischen Zwischenschicht gerichtete Oberfläche der ersten Scheibe, während die außenseitige Oberfläche der ersten Scheibe in Einbaulage zum Fahrzeug- oder Gebäudeinnenraum orientiert ist. Die innenseitige Oberfläche der zweiten Scheibe ist ebenfalls zur thermoplastischen Zwischenschicht ausgerichtet, wohingegen die außenseitige Oberfläche der zweiten Scheibe zur äußeren Umgebung weist. Die erste und die zweite Scheibe enthalten Glas und/oder transparente Kunststoffe wie beispielsweise Polycarbonat oder Polymethylmethacrylat. Bevorzugt bestehen die Scheiben aus Glas. An den außenseitigen Oberflächen der ersten und der zweiten Scheibe können prinzipiell beliebige weitere Scheiben angeordnet sein und mit diesen über Lamination unter Zwischenlage thermoplastischer Folien oder auch über Abstandshalter im Falle einer Isolierverglasung verbunden sein. Handelt es sich bei dem Funktionselement beispielsweise um einen Berührungssensor, so ist die Scheibe, über die der Sensor bedient werden soll, als äußere Scheibe vorzusehen, an der keine weiteren Scheiben angebracht werden sollten. Im Allgemeinen wird die dem Sensor nächstliegende Scheibe zur Auslösung der Sensorfunktion verwendet.

Die erste Laminierfolie und die zweite Laminierfolie sind thermoplastische Folien, die geeignet sind eine adhäsive Verbindung zueinander und zu angrenzenden Scheiben und/oder angrenzenden Funktionselementen herzustellen. Beim Laminiervorgang beginnen die erste Laminierfolie und die zweite Laminierfolie unter Hitzeeinwirkung zu fließen, wodurch diese an angrenzenden Elementen anhaften und mit diesen und miteinander verbunden werden. Bevorzugt enthalten die erste und die zweite Laminierfolie Polyvinylbutyral (PVB), Ethylenvinylacetat (EVA) und/oder Polyurethan (PU). Diese Materialien sind für die thermoplastische Zwischenschicht von Verbundscheiben üblich und stellen eine adhäsive Verbindung zu Glas her. Somit ist eine gute Verbindung gewährleistet. In der Verbundscheibe als fertig laminiertem Endprodukt bleiben die einzelnen Folien trotz eines Verschmelzens beim Laminiervorgang als solche identifizierbar. Insbesondere an den Rändern der Folien kommt es zu einem Fließen des Materials während des Laminiervorgangs, eine vollständige Vermischung tritt jedoch nicht ein, so dass im Produkt noch die einzelnen Folienabschnitte und deren Zusammensetzung (z.B. Weichmachergehalt) nachweisbar sind.

Erfindungsgemäß ist die Dicke der ersten Laminierfolie (mindestens 0,3 mm) wesentlich größer als die Dicke der zweiten Laminierfolie (jeweils höchstens 70 µm). Die erste Laminierfolie sollte eine dementsprechende Dicke aufweisen, um die erste Scheibe und die zweite Scheibe sicher zu verbinden. Lokale Unebenheiten können mittels einer flächig aufgebrachten ersten Laminierfolie dieser Mindestdicke zuverlässig ausgeglichen werden. Für die zweite Laminierfolie ist hingegen eine erfindungsgemäß dünne Folie einzusetzen um die lokale Dickenerhöhung im Bereich des Funktionselementes möglichst gering zu halten.

Je dünner die zweite Laminierfolie ist, desto wirksamer kann ein Dickenversatz entlang der Verbundscheibe vermieden werden, jedoch sind thermoplastische Folien nicht beliebig dünn herstellbar. Je härter eine thermoplastische Folie ist, desto dünner kann sie hergestellt, insbesondere extrudiert werden. Die zweite Laminierfolie weist daher bevorzugt eine möglichst geringe Menge an Weichmacher auf, um sie möglichst dünn herstellen zu können. Übliche thermoplastische Folien, insbesondere solche aus PVB, weisen einen Weichmacheranteil von mindestens 15 Gew.-% auf. Die zweite Laminierfolie weist einen demgegenüber reduzierten Wert auf und enthält einen Weichmacheranteil von kleiner als 15 Gew.-%, besonders bevorzugt kleiner als 10 Gew.-%, ganz besonders bevorzugt kleiner als 5 Gew.-% und ist insbesondere im Wesentlichen weichmacherfrei. Die erste Laminierfolie mit einer Dicke von mindestens 0,3 mm enthält bevorzugt einen Weichmacheranteil von mindestens 15 Gew.-%. Die erste Laminierfolie und die zweiten Laminierfolien basieren bevorzugt auf demselben Polymer, unterscheiden sich jedoch wie erwähnt im Weichmachergehalt.

Die zweite Laminierfolie weist bevorzugt eine Dicke von 10 µm bis 70 µm, besonders bevorzugt von 25 µm bis 70 µm, insbesondere von 40 µm bis 60 µm, beispielsweise etwa 50 µm auf. Damit können gute Ergebnisse hinsichtlich der Reduzierung von mechanischen Spannungen erreicht werden.

Die Dicke zweier überlappend angebrachter zweiter Laminierfolien beträgt in Summe maximal 140 µm. Bevorzugt beträgt diese in Summe maximal 100 µm. Werden mehrere Folien überlappend eingesetzt, beispielsweise bei zwei zweiten Laminierfolien im Bereich eines Funktionselementes, so ist es erstrebenswert die Dicke der einzelnen Folien zu verringern um einen möglichst geringen Gesamtversatz zu erreichen.

Die erste Laminierfolie weist eine Dicke von 0,30 mm bis 1,5 mm, bevorzugt 0,35 mm bis 1,0 mm, besonders bevorzugt 0,35 mm bis 0,8 mm auf. PVB-Folien werden beispielsweise in Standarddicken von 0,38 mm und 0,76 mm angeboten.

Die Funktionselemente weisen eine Dicke von maximal 200 µm, bevorzugt 50 µm bis 200 µm, besonders bevorzugt 50 µm bis 150 µm auf. Diese Größenordnung ist vorteilhaft, um das Risiko unerwünschter Spannungsrisse zu vermindern. Typische Funktionselemente in Automobilverglasungen nehmen einen Flächenanteil von 0,5 % bis 10 %, bevorzugt 1 % bis 5 %, beispielsweise 2,5 % der Gesamtverglasungsfläche ein. Die Kantenlänge der Funktionselemente, aus der sich, in Summe mit dem gewünschten Überstand x, die Fläche der zweiten Laminierfolie ergibt, beträgt in der Regel maximal 20 cm x 20 cm, bevorzugt maximal 15 cm x 15 cm, besonders bevorzugt maximal 10 cm x 10 cm. Der Verglasungsbereich mit einer lokal erhöhten Dicke erstreckt sich demnach über eine vergleichsweise geringe Fläche der Verglasung, so dass auch dadurch die Gefahr von Glasbruch minimiert wird.

Die zweiten Laminierfolien sind erfindungsgemäß nur lokal im Bereich der Funktionselemente in die Verbundscheibe eingelegt und ragen umlaufend mindestens 1 mm und maximal 10 mm über die Kontur des Funktionselementes hinaus. Im Vergleich zu einer vollflächigen Verwendung der zweiten Laminierfolien ergibt sich dadurch ein Gewichts- und Kostenvorteil. Darüber hinaus ist es, insbesondere bei einem großen Dickenversatz zwischen dem Bereich des Funktionselementes und der restlichen Verbundscheibe, vorteilhaft einen schrittweisen Übergang zwischen diesen Bereichen zu schaffen. In einer möglichen Ausführungsform wird ein geringerer Überstand gewählt, bevorzugt von 1 mm bis 5 mm, besonders bevorzugt von maximal 1 mm bis 4 mm, insbesondere von 2 mm bis 3 mm. Die Erfinder haben festgestellt, dass die Kaschierung der Kantenerscheinung des Funktionselementes wesentlich verbessert wird, wenn die zweiten Laminierfolien mit einem solchen geringen Überstand zum Funktionselement aufgelegt werden. Die Tatsache, dass ein Überstand der zweiten Laminierfolien zu einer wesentlich größeren Verbesserung führt als eine deckungsgleiche Positionierung, war für die Erfinder überraschend und unerwartet.

. Die erfindungsgemäße Verbundscheibe kann auch über mehrere elektrisch schaltbare Funktionselemente verfügen, wobei diese auch von unterschiedlicher Bauart und Funktion sein können. Besonders bevorzugt umfasst das elektrisch schaltbare Funktionselement eine nicht thermoplastische Trägerfolie. Insbesondere ist die Trägerfolie eine Polyesterfolie, beispielsweise eine Polyethylenterephthalatfolie. Diese Folien zeigen keinerlei Haftung auf Glas, wodurch es zu Lufteinschlüssen zwischen Trägerfolie und einer angrenzenden Glasscheibe kommt. Die Erfindung schafft hier Abhilfe.

Gemäß der Erfindung ist das elektrisch schaltbare Funktionselement ein Sensor, insbesondere ein Berührungssensor. Die erfindungsgemäße Verbundscheibe ist besonders zur Aufnahme von Sensoren als Funktionselement geeignet, da durch die erfindungsgemäße Dickenauswahl der ersten Laminierfolie und der zweiten Laminierfolie eine asymmetrische Einbindung des Funktionselementes in der Verbundscheibe entsteht. Dies ist insbesondere bei Verwendung von Sensoren vorteilhaft, da auf diese Weise die selektive Bedienbarkeit eines Berührungssensors von nur einer der außenliegenden Oberflächen der Verbundscheibe ausgehend verbessert wird.

Der Sensor umfasst eine Trägerfolie mit einer elektrisch leitfähigen Beschichtung, wobei in der elektrisch leitfähigen Beschichtung mindestens ein kapazitiver Schaltbereich durch mindestens eine beschichtungsfreie Trennlinie aus der elektrisch leitfähigen Beschichtung abgetrennt ist. In einer vorteilhaften Ausgestaltung der erfindungsgemäßen Scheibe beträgt die Breite der Trennlinie von 30 µm bis 200 µm und bevorzugt von 70 µm bis 140 µm. Derartig dünne Trennlinien erlauben eine sichere und ausreichend hohe elektrische Isolierung und stören gleichzeitig die Durchsicht durch die Verbundscheibe nicht oder nur geringfügig.

Der kapazitive Schaltbereich weist einen Berührungsbereich, einen Zuleitungsbereich und einen Anschlussbereich auf. Der Zuleitungsbereich verbindet den Berührungsbereich mit dem Anschlussbereich elektrisch, wobei der Anschlussbereich mit einer Sensorelektronik elektrisch verbindbar ist.

Der Schaltbereich ist ein kapazitiver Schaltbereich, das heißt er ist besonders für eine kapazitive Berührungsdetektion ausgebildet. In einer vorteilhaften Ausgestaltung bildet der Schaltbereich dabei eine Flächenelektrode aus. Über eine externe kapazitive Sensorelektronik wird die Kapazität der Flächenelektrode gemessen. Die Kapazität der Flächenelektrode ändert sich gegen Erde, wenn ein Körper (beispielsweise ein menschlicher Körper), in ihre Nähe kommt oder beispielsweise eine Isolatorschicht über der Flächenelektrode berührt. Die Isolatorschicht umfasst insbesondere die erste Scheibe als solche. Die Kapazitätsänderung wird durch die Sensorelektronik gemessen und bei Überschreiten eines Schwellwerts wird ein Schaltsignal ausgelöst. Der Schaltbereich wird durch Form und Größe der Flächenelektrode festgelegt.

Der Bereich der elektrisch leitfähigen Schicht, der außerhalb des kapazitiven Schaltbereichs angeordnet ist und von diesem durch die Trennlinie elektrisch isoliert ist, wird im Folgenden Umgebungsbereich genannt. Der Umgebungsbereich kann über einen weiteren Anschlussbereich mit der Sensorelektronik verbindbar sein.

In einer solchen Anordnung bilden der kapazitive Schaltbereich und der Umgebungsbereich zwei Elektroden aus, die kapazitiv miteinander gekoppelt sind. Die Kapazität des von den Elektroden gebildeten Kondensators ändert sich bei Annäherung eines Körpers, beispielsweise eines menschlichen Körperteils. Die Kapazitätsänderung wird durch eine Sensorelektronik gemessen und bei Überschreiten eines Schwellwerts wird ein Schaltsignal ausgelöst. Der sensitive Bereich wird durch Form und Größe des Bereichs, in denen die Elektroden kapazitiv gekoppelt sind, festgelegt.

Der erfindungsgemäße kapazitive Schaltbereich und gegebenenfalls der Umgebungsbereich sind in die erfindungsgemäße Verbundscheibe integriert. Es ist also kein Schalter oder ähnliches als separates Bauteil nötig, welches an der Verbundscheibe angebracht werden muss. Die Verbundscheibe weist bevorzugt auch keine sonstigen Bauteile auf, die im Durchsichtbereich auf ihren Oberflächen angeordnet sind. Das ist besonders vorteilhaft im Hinblick auf eine dünne Bauweise der Verbundscheibe sowie einer nur geringen Störung der Durchsicht durch die Verbundscheibe.

Gezeigt ist eine Scheibenanordnung mit einer erfindungsgemäßen Verbundscheibe und einer Sensorelektronik, die über den Anschlussbereich mit dem kapazitiven Schaltbereich und gegebenenfalls über einen weiteren Anschlussbereich mit der Umgebungsfläche elektrisch verbunden ist. Die Sensorelektronik ist eine kapazitive Sensorelektronik.

In einer möglichen Ausgestaltung der Scheibenanordnung ist die Empfindlichkeit der Sensorelektronik so gewählt, dass die Sensorelektronik bei Berührung des Berührungsbereichs mit einem menschlichen Finger auf der ersten Scheibe ein Schaltsignal ausgibt und bei Berührung des Berührungsbereichs auf der zweiten Scheibe kein Schaltsignal oder ein anderes Schaltsignal ausgibt. Es versteht sich, dass die Berührung des Berührungsbereichs auch mit mehreren Fingern oder einem anderen menschlichen Körperteil erfolgen kann. Unter Berührung wird im Rahmen dieser Erfindung jegliche Wechselwirkung mit dem Schaltbereich verstanden, die zu einer messbaren Änderung des Messsignals, also hier der Kapazität, führt. Insbesondere ist dies eine Berührung einer außenseitigen Oberfläche der Verbundscheibe in einer Zone, die sich durch orthogonale Projektion des Berührungsbereichs auf der außenseitigen Oberfläche ergibt.

Zusätzlich oder auch alternativ dazu verbessert die erfindungsgemäße Verbundscheibe selbst bereits die selektive Schaltbarkeit des Sensors. Der Sensor wird so in die thermoplastische Zwischenschicht der Verbundscheibe eingelegt, dass die elektrisch leitfähige Beschichtung der Trägerfolie in Richtung der ersten Scheibe weist. Dabei ist eine Auslösung des Schaltvorgangs im Bereich der orthogonalen Projektion des Berührungsbereichs auf der außenseitigen Oberfläche der ersten Scheibe vorgesehen. Ist beispielsweise die Bedienung eines Sensors in einer Windschutzscheibe aus dem Fahrzeuginnenraum vorgesehen, so stellt die erste Scheibe die zum Fahrzeuginnenraum gerichtete Innenscheibe der Verbundscheibe dar. Wird der Sensor hingegen als Regensensor in Kraftfahrzeugen eingesetzt, so entspricht die erste Scheibe der zur Fahrzeugumgebung ausgerichteten Außenscheibe der Verbundscheibe. Da zwischen erster Scheibe und elektrisch leitfähiger Beschichtung des Sensors lediglich eine dünne thermoplastische Folie mit maximal 70 µm Dicke liegt (zweite Laminierfolie), ist eine hohe Empfindlichkeit des Berührungssensors von Seiten der ersten Scheibe gegeben. Ferner wird die Berührungsempfindlichkeit des Sensors durch die vollflächige Adhäsion der Schichten über die zweite Laminierfolie verbessert. Zwischen der Trägerfolie des Sensors und der zweiten Scheibe befindet sich zumindest die erste Laminierfolie mit einer Dicke von mindestens 0,3 mm sowie optional eine weitere zweite Laminierfolie. Der Abstand der Sensoranordnung zur außenseitigen Oberfläche der zweiten Scheibe ist somit in jedem Fall wesentlich größer als der Abstand zur außenseitigen Oberfläche der ersten Scheibe. Durch diese erfindungsgemäße Asymmetrie ist eine selektive Schaltbarkeit des Sensors gewährleistet. Dieser Effekt lässt sich quantitativ mit Hilfe des jeweiligen Flächenkapazitätsbelags auf Seiten der ersten Scheibe und der zweiten Scheibe beschreiben.

Der Flächenkapazitätsbelag c₁ beziehungsweise c₂ ist definiert als die Kapazität eines Plattenkondensators desjenigen Bereichs der Verbundscheibe, der sich durch orthogonale Projektion des Berührungsbereichs zwischen dem Berührungsbereich und der außenseitigen Oberfläche der ersten Scheibe beziehungsweise der außenseitigen Oberfläche der zweiten Scheibe ergibt, wobei die sich ergebende Kapazität auf die Fläche des Berührungsbereichs normiert wird. Außenseitige Oberfläche bedeutet hierbei die Oberfläche der Verbundscheibe die nach außen, also von der Verbundscheibe weg, weist. Innenseitige Oberfläche bedeutet demnach die Oberfläche der ersten oder der zweiten Scheibe, die ins Innere der Verbundscheibe weist und mit einer Zwischenschicht flächig verbunden ist.

Der Flächenkapazitätsbelag ist folglich die auf die Fläche (und insbesondere auf die oben genannte orthogonale Projektionsfläche) normierte Kapazität der gesamten Schichtfolgen (Belag) zwischen der elektrisch leitfähigen Schicht und der jeweiligen außenseitigen Oberfläche der Verbundscheibe.

Der besondere Vorteil einer solchen erfindungsgemäßen Scheibenanordnung liegt darin, dass das Schaltsignal nur bei Berührung der Verbundscheibe von einer der außenseitigen Oberflächen ausgelöst werden kann. Bei einer Verwendung der Scheibenanordnung in einer Fahrzeugscheibe und Einbau der Verbundscheibe mit der ersten Scheibe in Richtung des Fahrzeuginnenraums, kann beispielsweise ein Auslösen des Schaltvorgangs durch Personen von außen oder ein ungewolltes Auslösen des Schaltvorgangs durch Regen oder die Bewegung des Scheibenwischers sicher vermieden werden, ohne aufwändige Maßnahmen wie zusätzliche vollflächige Laminierfolien oder Rahmenfolien zu verwenden. Dies war für den Fachmann unerwartet und überraschend.

Erfindungsgemäß ist der Flächenkapazitätsbelag c₁ zwischen dem Berührungsbereich und der außenseitigen Oberfläche der ersten Scheibe größer als der Flächenkapazitätsbelag c₂ zwischen dem Berührungsbereich und der außenseitigen Oberfläche der zweiten Scheibe. Wie diskutiert tritt dieser Effekt vor allem durch die erfindungsgemäße Wahl der Foliendicken der Laminierfolien zutage. Dadurch lässt sich der Sensor selektiv von der außenseitigen Oberfläche der ersten Scheibe bedienen.

In einer vorteilhaften Ausgestaltung der erfindungsgemäßen Verbundscheibe ist das Verhältnis des Flächenkapazitätsbelags c₁ zum Flächenkapazitätsbelag c₂ größer oder gleich 1,1:1, bevorzugt größer oder gleich 1,2:1, beträgt. Für derartige Verhältnisse lässt sich eine Berührung der außenseitigen Oberfläche der ersten Scheibe bereits gut von einer Berührung der außenseitigen Oberfläche der zweiten Scheine unterscheiden.

Die Größe des Flächenkapazitätsbelags hängt nicht nur von der Schichtdicke zwischen kapazitivem Schaltbereich und der betrachteten außenseitigen Oberfläche, sondern auch von der Durchlässigkeit der zwischenliegenden Schichten für elektrische Felder ab. Dies wird durch die relative Permittivität eines Stoffes beschrieben. Die erste Scheibe und/oder die zweite Scheibe weisen bevorzugt eine relative Permittivität von 2 bis 8 und besonders bevorzugt von 6 bis 8 auf. Bei derartigen relativen Permittivitäten konnte eine besonders gute Unterscheidung zwischen einer Berührung der Berührungsfläche über die außenseitige Oberfläche der ersten Scheibe von gegenüber der außenseitigen Oberfläche der zweiten Scheibe erzielt werden.

Die erste und die zweite Laminierfolie haben bevorzugt eine relative Permittivität von 2 bis 4 und besonders bevorzugt von 2,1 bis 2,9. Bei derartigen relativen Permittivitäten konnte eine besonders gute Empfindlichkeit der orthogonal projizierten Berührungsfläche erzielt werden.

Die Empfindlichkeit der Sensorelektronik kann in Abhängigkeit der Größe des Berührungsbereichs und in Abhängigkeit der Dicke von Substrat, Zwischenschichten und Deckscheibe im Rahmen einfacher Experimente ermittelt werden.

Die erfindungsgemäße Trägerfolie ist bevorzugt transparent. Bevorzugt enthält die Trägerfolie einen Polyester oder besteht aus Polyestern. Sie enthält besonders bevorzugt eine Polyethylenterepthalat (PET)-Folie oder besteht daraus. Die Dicke der Trägerfolie beträgt bevorzugt von 0,025 mm bis 0,1 mm. Die Trägerfolie hat bevorzugt eine relative Permittivität von 2 bis 4 und besonders bevorzugt von 2,7 bis 3,3. Mit derartigen dünnen Trägerfolien lassen sich besonders gute Verbundscheiben herstellen, da diese nur geringfügig zu einer lokalen Dickenerhöhung beitragen. Gleichzeit lassen sich gute und selektive Schaltsignale erzeugen. Die erfindungsgemäße elektrisch leitfähige Beschichtung ist bevorzugt auf einer Oberfläche der Trägerfolie angeordnet, das heißt auf genau einer der beiden Seiten der Trägerfolie (also auf deren Vorderseite oder deren Rückseite).

Die elektrisch leitfähige Beschichtung enthält bevorzugt eine transparente, elektrisch leitfähige Schicht. Transparent bedeutet hier durchlässig für elektromagnetische Strahlung, vorzugsweise elektromagnetische Strahlung einer Wellenlänge von 300 nm bis 1.300 nm und insbesondere für sichtbares Licht.

Erfindungsgemäße elektrisch leitfähige Beschichtungen sind beispielsweise aus DE 20 2008 017 611 U1, EP 0 847 965 B1 oder WO2012/052315 A1 bekannt. Sie enthalten typischerweise eine oder mehrere, beispielsweise zwei, drei oder vier elektrisch leitfähige, funktionelle Schichten. Die funktionellen Schichten enthalten bevorzugt zumindest ein Metall, beispielsweise Silber, Gold, Kupfer, Nickel und/oder Chrom, oder eine Metalllegierung. Die funktionellen Schichten enthalten besonders bevorzugt mindestens 90 Gew. % des Metalls, insbesondere mindestens 99,9 Gew. % des Metalls. Die funktionellen Schichten können aus dem Metall oder der Metalllegierung bestehen. Die funktionellen Schichten enthalten besonders bevorzugt Silber oder eine silberhaltige Legierung. Solche funktionellen Schichten weisen eine besonders vorteilhafte elektrische Leitfähigkeit bei gleichzeitiger hoher Transmission im sichtbaren Spektralbereich auf. Die Dicke einer funktionellen Schicht beträgt bevorzugt von 5 nm bis 50 nm, besonders bevorzugt von 8 nm bis 25 nm. In diesem Bereich für die Dicke der funktionellen Schicht wird eine vorteilhaft hohe Transmission im sichtbaren Spektralbereich und eine besonders vorteilhafte elektrische Leitfähigkeit erreicht.

Typischerweise ist jeweils zwischen zwei benachbarten funktionellen Schichten zumindest eine dielektrische Schicht angeordnet. Bevorzugt ist unterhalb der ersten und/oder oberhalb der letzten funktionellen Schicht eine weitere dielektrische Schicht angeordnet. Eine dielektrische Schicht enthält zumindest eine Einzelschicht aus einem dielektrischen Material, beispielsweise enthaltend ein Nitrid wie Siliziumnitrid oder ein Oxid wie Aluminiumoxid. Die dielektrische Schicht kann aber auch mehrere Einzelschichten umfassen, beispielsweise Einzelschichten aus einem dielektrischen Material, Glättungsschichten, Anpassungsschichten, Blockerschichten und / oder Antireflexionsschichten. Die Dicke einer dielektrischen Schicht beträgt beispielsweise 10 nm bis 200 nm.

Dieser Schichtaufbau wird im Allgemeinen durch eine Folge von Abscheidevorgängen erhalten, die durch ein Vakuumverfahren wie die magnetfeldgestützte Kathodenzerstäubung durchgeführt werden.

Die elektrisch leitfähige Beschichtung kann prinzipiell jede Schicht sein, die elektrisch kontaktiert werden kann. Soll die erfindungsgemäße Scheibe die Durchsicht ermöglichen, wie es beispielsweise bei Scheiben im Fensterbereich der Fall ist, so ist die elektrisch leitfähige Beschichtung bevorzugt transparent.

In einer vorteilhaften Ausgestaltung einer erfindungsgemäßen Verbundscheibe ist die elektrisch leitfähige Beschichtung um eine Breite von 2 mm bis 50 mm, bevorzugt von 5 mm bis 20 mm vom Rand der Verbundscheibe entfernt angeordnet. Die elektrisch leitfähige Beschichtung weist dann keinen Kontakt zur Atmosphäre auf und ist im Inneren der Verbundscheibe durch die Zwischenschichten vorteilhaft vor Beschädigungen und Korrosion geschützt.

In einer vorteilhaften Weiterbildung einer erfindungsgemäßen Verbundscheibe ist der Anschlussbereich mit einem Flachleiter verbunden und der Flachleiter ist aus der Scheibe herausgeführt. Die integrierte Verbundscheibe kann dann besonders einfach am Verwendungsort mit einer Spannungsquelle und einer Signalleitung verbunden werden, die das Schaltsignal der Sensorschaltung auswertet, beispielsweise in einem Fahrzeug über einen CAN-Bus. Flachleiter, mitunter auch flexible Folienleiter oder Flachbandleiter genannt, bestehen bevorzugt aus einem verzinnten Kupferband mit einer Dicke von 0,03 mm bis 0,1 mm und einer Breite von 2 mm bis 16 mm. Kupfer hat sich für solche Leiterbahnen bewährt, da es eine gute elektrische Leitfähigkeit sowie eine gute Verarbeitbarkeit zu Folien besitzt. Gleichzeitig sind die Materialkosten niedrig. Es können auch andere elektrisch leitende Materialien verwendet werden, die sich zu Folien verarbeiten lassen. Beispiele hierfür sind Aluminium, Gold, Silber oder Zinn und Legierungen davon.

Die erste Scheibe und/oder die zweite Scheibe enthalten bevorzugt Glas, besonders bevorzugt Flachglas, Floatglas, Quarzglas, Borosilikatglas, Kalk-Natron-Glas, oder klare Kunststoffe, vorzugsweise starre klare Kunststoffe, insbesondere Polycarbonat, Polymethylmethacrylat und/oder Gemische davon. Die erste Scheibe und/oder die zweite Scheibe sind bevorzugt transparent, insbesondere für die Verwendung der Scheibe als Windschutzscheibe oder Rückscheibe eines Fahrzeugs oder anderen Verwendungen bei denen eine hohe Lichttransmission erwünscht ist. Als transparent im Sinne der Erfindung wird dann eine Scheibe verstanden, die eine Transmission im sichtbaren Spektralbereich von größer 70 % aufweist. Für Scheiben, die nicht im verkehrsrelevanten Sichtfeld des Fahrers liegen, beispielsweise für Dachscheiben, kann die Transmission aber auch viel geringer sein, beispielsweise größer als 5 %.

Die Dicke der ersten Scheibe und/oder der zweiten Scheibe liegt zwischen 0,3 mm und 25 mm, wobei die Scheibendicke stark abhängig ist von der Anwendung der Scheibe.

Für Anwendungen im Bereich der Gebäudeverglasung können die Scheibendicken beispielsweise eine Dicke im Bereich von 2 mm bis 10 mm aufweisen.

Besonders im Automobilbereich ist in den letzten Jahren ein Trend in Richtung immer geringerer Glasdicken zu verzeichnen, wodurch Einsparungen hinsichtlich des Fahrzeuggewichts möglich werden. Die Scheibendicken einer Automobilverglasung, insbesondere einer Windschutzscheibe, liegen für die Innenscheibe in der Regel im Bereich von 0,3 mm bis 2,5 mm und für die Außenscheibe im Bereich von 0,8 mm bis 2,5 mm. Eine asymmetrische Dickenkombination, bei der die Dicke der Außenscheibe größer ist als die Dicke der Innenscheibe, ist besonders bei einer geringen Gesamtdicke vorteilhaft im Hinblick auf eine verbesserte Stabilität der Verbundscheibe. Ob die Außenscheibe bzw. die Innenscheibe der Automobilverglasung in ihrer Nomenklatur der ersten oder der zweiten Scheibe im Sinne der Erfindung entspricht hängt dabei von der Positionierung des Funktionselementes in der Zwischenschicht ab.

In einer bevorzugten Ausführungsform ist die Verbundscheibe eine Windschutzscheibe, wobei die Dicke der Außenscheibe zwischen 0,8 mm und 2,1 mm liegt und die Dicke der Innenscheibe zwischen 0,5 mm und 1,8 mm liegt.

In einer weiteren bevorzugten Ausführungsform der Erfindung ist die Verbundscheibe eine Dachscheibe eines Kraftfahrzeugs, wobei die Dicke der Außenscheibe zwischen 1,1 mm und 2,1 mm liegt und die Dicke der Innenscheibe zwischen 0,5 mm und 1,6 mm liegt.

Das Verbundglas ist in seiner Ausführungsform als Fahrzeugverglasung bevorzugt in einer oder in mehreren Richtungen des Raumes gebogen, wie es für Kraftfahrzeugscheiben üblich ist, wobei typische Krümmungsradien im Bereich von etwa 10 cm bis etwa 40 cm liegen. Das Verbundglas kann aber auch plan sein, beispielsweise wenn es als Scheibe für Busse, Züge, Traktoren oder als Gebäudeverglasung vorgesehen ist.

Die erste Scheibe und/oder die zweite Scheibe können thermisch oder chemisch vorgespannt, teilvorgespannt oder nicht vorgespannt sein.

Das Verbundglas kann auch mit einer Zusatzfunktion versehen werden, indem die thermoplastische Zwischenschicht funktionelle Einlagerungen aufweist, beispielsweise Einlagerungen mit IR-absorbierenden, UV-absorbierenden, farbgebenden oder akustischen Eigenschaften. Die Einlagerungen sind beispielsweise organische oder anorganische Ionen, Verbindungen, Aggregate, Moleküle, Kristalle, Pigmente oder Farbstoffe.

Insbesondere bei Verwendung der erfindungsgemäßen Verbundscheibe in Fahrzeugen, zum Beispiel als Windschutzscheibe, ist es vorteilhaft darüberhinausgehende Funktionen zu implementieren um die negativen Auswirkungen von Witterungseinflüssen wie starker Sonneneinstrahlung oder Eisbildung zu verringern. Dazu können beispielsweise sogenannte Low-E-Beschichtungen und/oder heizbare Beschichtungen auf der Innenseite der Innenscheibe oder der Außenscheibe aufgebracht sein. Geeignete Materialzusammensetzungen einer elektrisch heizbaren Beschichtung, die auch als Low-E-Beschichtung fungiert, sind beispielsweise WO 2013/104439 und WO 2013/104438 zu entnehmen.

Die Erfindung wird weiter gelöst durch ein Verfahren zur Herstellung eines erfindungsgemäßen Verbundglases, wobei
a) ein elektrisch schaltbares Funktionselement zwischen einer ersten Laminierfolie und einer zweiten Laminierfolie
   oder
   zwischen einer ersten Laminierfolie und einer zweiten Laminierfolie auf einer Seite und einer weiteren zweiten Laminierfolie auf der anderen Seite eingebettet wird,
b) die in Schritt a) gebildete thermoplastische Zwischenschicht mit Funktionselement auf eine zweite Scheibe aufgelegt wird,
c) der Schichtstapel mit einer ersten Scheibe abgeschlossen wird,
d) der Schichtstapel aus in dieser Reihenfolge erster Scheibe, zweiter Laminierfolie, Funktionselement, optional einer weiteren zweiten Laminierfolie, erster Laminierfolie und zweiter Scheibe zu einer Verbundscheibe laminiert wird.

Das erfindungsgemäße Verfahren bietet den Vorteil, dass alle Komponenten der in Schritt a) zusammengelegten thermoplastischen Zwischenschicht gemeinsam in einem Arbeitsschritt auf die zweite Scheibe aufgelegt werden können.

Soll das Verbundglas als gebogene Fahrzeugverglasung fungieren, so wird zumindest die als Außenscheibe verwendete Scheibe vor der Lamination einem Biegeprozess unterzogen. In einer bevorzugten Ausführung wird die als Innenscheibe eingesetzte Scheibe ebenfalls einem Biegeprozess unterzogen. Dies ist insbesondere bei starken Biegungen in mehrere Richtungen des Raums (sogenannte dreidimensionale Biegungen) vorteilhaft.

Alternativ wird die als Innenscheibe verwendete Scheibe nicht vorgebogen. Dies ist besonders bei Scheiben mit sehr geringen Dicken vorteilhaft, da diese eine folienartige Flexibilität aufweisen und so an die vorgebogene Außenscheibe angepasst werden können, ohne selbst vorgebogen werden zu müssen.

Die erste und die zweite Scheibe können einzelnen gebogen werden. Bevorzugt werden die Scheiben gemeinsam (d.h. zeitgleich und durch dasselbe Werkzeug) kongruent gebogen, weil dadurch die Form der Scheiben für die später erfolgende Laminierung optimal aufeinander abgestimmt ist.

Das Verbinden der ersten Scheibe und der zweiten Scheibe in Verfahrensschritt d) erfolgt bevorzugt unter Einwirkung von Hitze, Vakuum und/oder Druck. Es können an sich bekannte Verfahren zur Herstellung einer Verbundscheibe verwendet werden.

Es können beispielsweise sogenannte Autoklavverfahren bei einem erhöhten Druck von etwa 10 bar bis 15 bar und Temperaturen von 130 °C bis 145 °C über etwa 2 Stunden durchgeführt werden. An sich bekannte Vakuumsack- oder Vakuumring-verfahren arbeiten beispielsweise bei etwa 200 mbar und 80 °C bis 110°C. Die erste Scheibe, die thermoplastische Zwischenschicht und die zweite Scheibe können auch in einem Kalander zwischen mindestens einem Walzenpaar zu einer Scheibe verpresst werden. Anlagen dieser Art sind zur Herstellung von Scheiben bekannt und verfügen normalerweise über mindestens einen Heiztunnel vor einem Presswerk. Die Temperatur während des Pressvorgangs beträgt beispielsweise von 40 °C bis 150 °C. Kombinationen von Kalander-und Autoklavverfahren haben sich in der Praxis besonders bewährt. Alternativ können Vakuumlaminatoren eingesetzt werden. Diese bestehen aus einer oder mehreren beheizbaren und evakuierbaren Kammern, in denen die erste Scheibe und die zweite Scheibe innerhalb von beispielsweise etwa 60 Minuten bei verminderten Drücken von 0,01 mbar bis 800 mbar und Temperaturen von 80°C bis 170°C laminiert werden.

Handelt es sich bei dem elektrisch schaltbaren Funktionselement um einen Sensor umfassend eine Trägerfolie und eine elektrisch leitfähige Beschichtung, so kann die Beschichtung vor Verfahrensschritt a) durch an sich bekannte Verfahren auf der Trägerfolie abgeschieden werden. Beispielhaft ist dabei auf magnetfeldunterstützte Kathodenzerstäubung zu verweisen. Das ist besonders vorteilhaft im Hinblick auf eine einfache, schnelle, kostengünstige und gleichmäßige Beschichtung des Substrats. Die elektrisch leitfähige Beschichtung kann aber auch beispielsweise durch Aufdampfen, chemische Gasphasenabscheidung (chemical vapour deposition, CVD), plasmagestützte Gasphasenabscheidung (PECVD) oder durch nasschemische Verfahren aufgebracht werden.

Die Entschichtung einzelner Trennlinien in der elektrisch leitfähigen Beschichtung erfolgt vorzugsweise durch einen Laserstrahl. Verfahren zum Strukturieren dünner Metallfilme sind beispielsweise aus EP 2 200 097 A1 oder EP 2 139 049 A1 bekannt. Die Breite der Entschichtung beträgt bevorzugt 10 µm bis 1000 µm, besonders bevorzugt 30 µm bis 200 µm und insbesondere 70 µm bis 140 µm. In diesem Bereich findet eine besonders saubere und rückstandsfreie Entschichtung durch den Laserstrahl statt. Die Entschichtung mittels Laserstrahl ist besonders vorteilhaft, da die entschichteten Linien optisch sehr unauffällig sind und das Erscheinungsbild und die Durchsicht nur wenig beeinträchtigen.

Ein weiterer Aspekt der Erfindung umfasst die Verwendung der erfindungsgemäßen Verbundscheibe in Gebäuden, insbesondere im Zugangsbereich, Fensterbereich, Dachbereich oder Fassaden-bereich, als Einbauteil in Möbeln und Geräten, in Fortbewegungsmitteln für den Verkehr auf dem Lande, in der Luft oder zu Wasser, insbesondere in Zügen, Schiffen und Kraftfahrzeugen beispielsweise als Windschutzscheibe, Heckscheibe, Seitenscheibe und / oder Dachscheibe.

Im Folgenden wird die Erfindung anhand von Zeichnungen und Ausführungsbeispielen näher erläutert. Die Zeichnungen sind schematische Darstellungen und nicht maßstabsgetreu. Die Zeichnungen schränken die Erfindung in keiner Weise ein.

Es zeigen:
- Figur 1a: eine Draufsicht auf eine erfindungsgemäße Verbundscheibe 1 mit einem elektrisch schaltbaren Funktionselement 2, wobei die Verbundscheibe 1 flächig mit einer ersten Laminierfolie 5.1 laminiert ist und im Bereich des Funktionselements 2 eine zweite Laminierfolie 5.2 eingelegt ist,
- Figur 1b: eine Detailansicht der Verbundscheibe 1 gemäß Figur 1a im Bereich des Funktionselements 2,
- Figur 1c: einen Querschnitt durch die Verbundscheibe 1 im Bereich des Funktionselements 2 entlang der Schnittlinie AA' gemäß Figur 1a,
- Figur 2: eine weitere erfindungsgemäße Ausführungsform der Verbundscheibe 1 gezeigt entlang der Schnittlinie AA' analog Figur 1c,
- Figur 3: eine Ausführungsform des erfindungsgemäßen Verfahrens.

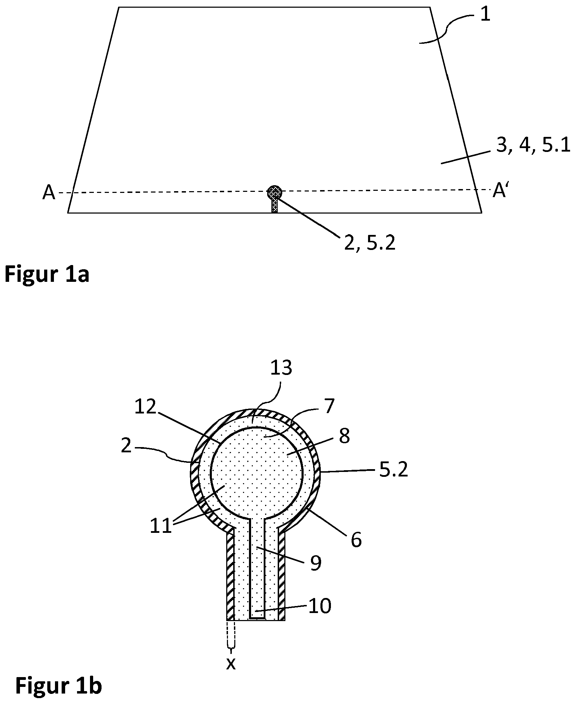

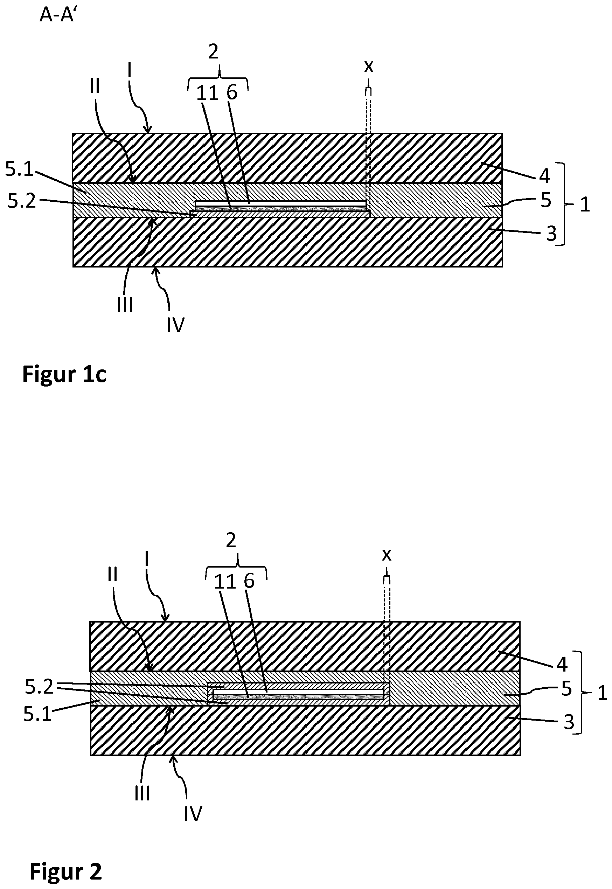

Figur 1a zeigt eine Draufsicht auf eine erfindungsgemäße Verbundscheibe 1 mit einem elektrisch schaltbaren Funktionselement 2, wobei die Verbundscheibe 1 flächig mit einer ersten Laminierfolie 5.1 laminiert ist und im Bereich des Funktionselements 2 eine zweite Laminierfolie 5.2 eingelegt ist. Figur 1b zeigt eine Detailansicht der Verbundscheibe 1 gemäß Figur 1a im Bereich des elektrisch schaltbaren Funktionselements 2. Figur 1c stellt einen Querschnitt durch die Verbundscheibe 1 gemäß Figur 1a im Bereich des Funktionselements 2 dar, wobei der Querschnitt entlang der Schnittlinie AA' erfolgt. Die Verbundscheibe 1 ist zur Verwendung als Windschutzscheibe eines Kraftfahrzeugs vorgesehen und umfasst eine erste Scheibe 3, die hier die Innenscheibe der Windschutzscheibe darstellt, und eine zweite Scheibe 4 (hier: Außenscheibe der Windschutzscheibe). Die Scheiben 3, 4 sind über eine thermoplastische Zwischenschicht 5 miteinander laminiert. Die thermoplastische Zwischenschicht 5 besteht aus einer ersten Laminierfolie 5.1, die vollflächig aufgebracht ist, und einer zweiten Laminierfolie 5.2, die nur lokal im Bereich des elektrisch schaltbaren Funktionselementes 2 vorhanden ist. Die erste Scheibe 3 weist eine außenseitige Oberfläche IV und eine innenseitige Oberfläche III auf. Die zweite Scheibe 4 verfügt über eine innenseitige Oberfläche II und eine außenseitige Oberfläche I. Die thermoplastische Zwischenschicht 5 verbindet die innenseitige Oberfläche III der ersten Scheibe 3 und die innenseitige Oberfläche II der zweiten Scheibe 4. Die zweite Scheibe 4 und die erste Scheibe 3 bestehen aus Kalk-Natron-Glas. Die erste Laminierfolie 5.1 ist eine thermoplastische Folie, hier eine Polyvinylbutyral-Folie mit einer Dicke von 0,76 mm gemessen vor dem Laminationsvorgang. Die zweite Laminierfolie 5.2 ist ebenfalls eine thermoplastische Polyvinylbutyral-Folie, die im Unterschied zur ersten Laminierfolie 5.1 im Wesentlichen weichmacherfrei ist und eine Dicke von 50 µm (vor dem Laminationsvorgang) aufweist. Die Schichtenabfolge der Verbundscheibe 1 im Bereich außerhalb des Funktionselements 2 besteht gemäß Figur 1c aus der ersten Scheibe 3, der ersten Laminierfolie 5.1 und der zweiten Scheibe 4. Dies ist besonders vorteilhaft, da durch Verwendung nur eines einzelnen Folienelementes der Aufbau auf das Wesentliche reduziert ist, im Produktionsprozess kein Verrutschen von Folienlagen gegeneinander auftritt und eine Gewichtsreduktion im Vergleich zu vollflächig mehrlagigen Zwischenschichten erreicht wird. Im Bereich des Funktionselementes 2 besteht die Schichtenabfolge der Verbundscheibe 1 aus der ersten Scheibe 3, der auf der innenseitigen Oberfläche III der ersten Scheibe 3 aufgelegten zweiten Laminierfolie 5.2, dem Funktionselement 2, der ersten Laminierfolie 5.1 und abschließend der zweiten Scheibe 4, deren innenseitige Oberfläche II auf der ersten Laminierfolie 5.1 aufliegt. Die zweite Laminierfolie 5.2 bewirkt somit eine Anbindung des Funktionselementes 2 an der innenseitigen Oberfläche III der ersten Scheibe 3, wobei aufgrund der guten Adhäsion der zweiten Laminierfolie an der benachbarten Scheibe keinerlei Lufteinschlüsse auftreten. Das Erscheinungsbild der Verbundscheibe ist somit wesentlich verbessert. Darüber hinaus wird die Kantenerscheinung des Funktionselementes 2 bei Durchsicht durch die Verbundscheibe 1 von Seiten der ersten Scheibe 3 (hier: Innenscheibe der Fahrzeugverglasung) durch die zweite Laminierfolie 5.2 kaschiert. Auch dies trägt entscheidend zu einem ansprechenden Erscheinungsbild und einer unauffälligen Integration des Funktionselementes 2 bei. Die zweite Laminierfolie 5.2 weist einen Überstand von 3,0 mm über die Kontur des Funktionselementes hinausgehend auf. So kann sichergestellt werden, dass auch bei einer leichten Verschiebung der Folienkomponenten im unlaminierten Stapel immer noch eine vollständige Bedeckung des Funktionselementes 2 durch die zweite Laminierfolie 5.2 besteht. Darüber hinaus konnten die Erfinder feststellen, dass ein Überstand x der zweiten Laminierfolien erstaunlicherweise zu einer weiteren entscheidenden Verbesserung der Kantenerscheinung im Vergleich zu einer deckungsgleichen Anordnung führt. Das Funktionselement 2 ist gemäß Figuren 1a, 1b und 1c ein Berührungssensor und umfasst eine Trägerfolie 6 auf der eine elektrisch leitfähige Beschichtung 11 aufgebracht ist. Diese gliedert sich durch eine beschichtungsfreie Trennlinie 12 in einen kapazitiven Schaltbereich 7 und einen Umgebungsbereich 13 (siehe Figur 1b). Der kapazitive Schaltbereich 7 umfasst einen Berührungsbereich 8, in dem die Bedienung des Berührungssensors vorgesehen ist, einen Anschlussbereich 10, der zur Anbindung an eine kapazitive Sensorelektronik mittels eines elektrischen Leiters (beide nicht gezeigt), dient und einen Zuleitungsbereich 9, der den Berührungsbereich 8 mit dem Anschlussbereich 10 verbindet. Die Trägerfolie weist eine Dicke von 50 µm auf. Das Funktionselement 2 ist so in die thermoplastische Zwischenschicht 5 eingelegt, dass elektrisch leitfähige Beschichtung 11 in Richtung der innenliegenden Oberfläche III der ersten Scheibe 3 weist und über die zweite Laminierfolie 5.2 an diese angebunden ist. Die Verwendung eines Berührungssensors als elektrisch schaltbares Funktionselement 2 ist in Verbindung mit der erfindungsgemäßen Verbundscheibe 1 besonders vorteilhaft, da durch die asymmetrischen Dicken der thermoplastischen Zwischenschicht 5 oberhalb und unterhalb des Funktionselementes die selektive Bedienbarkeit des Sensors verbessert wird. Überraschenderweise konnten die Erfinder feststellen, dass die erfindungsgemäße Verbundscheibe 1 keine erhöhte Anfälligkeit für mechanische Beschädigungen während des Produktionsprozesses zeigt, da die Druckspannungen im Bereich des einlaminierten Funktionselementes gering gehalten werden konnten.

Figur 2 zeigt eine weitere erfindungsgemäße Ausführungsform der Verbundscheibe 1, wobei Figur 2 einen Querschnitt durch eine erfindungsgemäße Verbundscheibe analog zu der in Figur 1a gezeigten Schnittlinie AA' darstellt. Der Grundaufbau entspricht dem in Figur 1c gezeigten. Im Unterschied zur Ausführungsform gemäß Figur 1c, ist in Figur 2 eine zusätzliche zweite Laminierfolie 5.2 zwischen Funktionselement 2 und erster Laminierfolie 5.1 eingelegt. Der Schichtaufbau im Bereich des Funktionselements 2 besteht demnach aus der ersten Scheibe 3, einer zweiten Laminierfolie 5.2, dem Funktionselement 2, einer weiteren zweiten Laminierfolie 5.2, der ersten Laminierfolie 5.1 und der zweiten Scheibe 4. Die wesentlichen Vorteile der Verbundscheibe gemäß Figur 2 entsprechen den für Figuren 1a, 1b und 1c beschriebenen. Zusätzlich dazu kann gemäß dem Aufbau von Figur 2 eine weitere Verbesserung der Kantenerscheinung des Funktionselementes 2, insbesondere bei Draufsicht auf die außenliegende Oberfläche I der zweiten Scheibe 4 erreicht werden. Auch in der Ausführungsform gemäß Figur 2 kann ein Überstand x nur einer oder auch beider der zweiten Laminierfolien 5.2 über das Funktionselement 2 vorgesehen sein. Beide zweite Laminierfolien 5.2 können auch einen voneinander verschiedenen Überstand x über das Funktionselement 2 aufweisen. In Figur 2 ist ein gemeinsamer umlaufender Überstand x = 1,0 mm beider zweiter Laminierfolien 5.2 über das Funktionselement 2 gezeigt. Dies führt, wie beschrieben, zu einer weiteren wesentlichen Verbesserung der Kantenerscheinung.

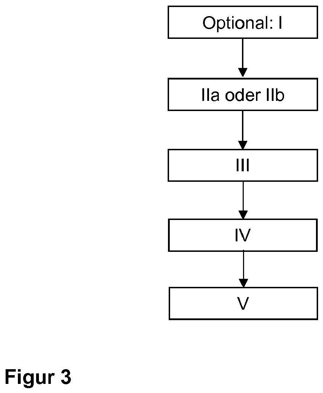

Figur 3 zeigt eine Ausführungsform des erfindungsgemäßen Verfahrens umfassend die Schritte:
I Optional: Gemeinsames kongruentes Biegen der zweiten Scheibe 4 und der ersten Scheibe 3,
Ila Einlegen eines elektrisch schaltbaren Funktionselements 2 zwischen einer ersten Laminierfolie 5.1 und einer zweiten Laminierfolie 5.2 oder
Ilb Einlegen eines elektrisch schaltbaren Funktionselements 2 zwischen einer ersten Laminierfolie 5.1 und einer zweiten Laminierfolie 5.2 auf einer Oberfläche des Funktionselementes 2 und einer weiteren zweiten Laminierfolie 5.2 auf der gegenüberliegenden Oberfläche des Funktionselementes 2,
III Auflegen der in Schritt Ila oder Ilb gebildeten thermoplastischen Zwischenschicht 5 auf eine zweite Scheibe 4,
IV Abschließen des Schichtstapels mit einer ersten Scheibe 3,
V Laminieren einer Verbundscheibe 1 aus in dieser Reihenfolge erster Scheibe 3, zweiter Laminierfolie 5.2, Funktionselement 2, optional einer weiteren zweiten Laminierfolie 5.2, erster Laminierfolie 5.1 und zweiter Scheibe 4 zu einer Verbundscheibe 1.

### Bezugszeichenliste:

- (1): Verbundscheibe
- (2): Funktionselement
- (3): erste Scheibe
- (4): zweite Scheibe
- (5): thermoplastische Zwischenschicht
- (5.1): erste Laminierfolie
- (5.2): zweite Laminierfolie
- (6): Trägerfolie
- (7): kapazitiver Schaltbereich
- (8): Berührungsbereich
- (9): Zuleitungsbereich
- (10): Anschlussbereich
- (11): elektrisch leitfähige Beschichtung
- (12): beschichtungsfreie Trennlinie
- (13): Umgebungsbereich

- AA': Schnittlinie
- x: Überstand der zweiten Laminierfolien 5.2 über das Funktionselement 2

- I: außenseitige Oberfläche der zweiten Scheibe 4
- II: innenseitige Oberfläche der zweiten Scheibe 4
- III: innenseitige Oberfläche der ersten Scheibe 3
- IV: außenseitige Oberfläche der ersten Scheibe 3

## Patentansprüche

1. Verbundscheibe (1) mit mindestens einem elektrisch schaltbaren Funktionselement (2), mindestens umfassend
- eine erste Scheibe (3),
- eine zweite Scheibe (4),
- eine thermoplastische Zwischenschicht (5), die die erste Scheibe (3) mit der zweiten Scheibe (4) verbindet, umfassend eine erste Laminierfolie (5.1) mit einer Dicke von mindestens 0,3 mm und eine oder mehrere zweite Laminierfolien (5.2) mit einer Dicke von jeweils höchstens 70 µm, wobei die zweiten Laminierfolien (5.2) einen Weichmacheranteil von kleiner als 15 Gew.-% enthalten,
wobei
- die erste Laminierfolie (5.1) im Wesentlichen flächig zwischen der ersten Scheibe (3) und der zweiten Scheibe (4) eingebracht ist,
- die zweiten Laminierfolien (5.2) ausschließlich im Bereich des mindestens einen Funktionselementes (2) eingebracht sind und mit einem Überstand x von mindestens 1 mm und maximal 10 mm über die äußeren Kanten des Funktionselementes (2) hinausragen,
- die unmittelbare Schichtabfolge im Bereich eines elektrisch schaltbaren Funktionselements (2) aus der ersten Scheibe (3), der zweiten Laminierfolie (5.2), dem elektrisch schaltbaren Funktionselement (2), optional einer weiteren zweiten Laminierfolie (5.2), der ersten Laminierfolie (5.1) und der zweiten Scheibe (4) besteht und
- das Funktionselement eine Dicke von maximal 200 µm aufweist und einen Anteil an der Gesamtfläche der Verglasung von unter 10 % aufweist, wobei das elektrisch schaltbare Funktionselement (2) ein Sensor ist und eine Trägerfolie (6) mit einer elektrisch leitfähigen Beschichtung (11) umfasst und in der elektrisch leitfähigen Beschichtung (11) mindestens ein kapazitiver Schaltbereich (7) durch mindestens eine beschichtungsfreie Trennlinie (12) aus der elektrisch leitfähigen Beschichtung abgetrennt ist.

2. Verbundscheibe nach Anspruch 1, wobei die unmittelbare Schichtabfolge in dem Bereich des Sichtbereichs der Verbundscheibe, der außerhalb des mindestens einen elektrisch schaltbaren Funktionselements (2) oder der Funktionselemente (2) und außerhalb des Überstands x liegt, aus der ersten Scheibe (3), der ersten Laminierfolie (5.1) und der zweiten Scheibe (4) besteht.

3. Verbundscheibe nach Anspruch 1 oder 2, wobei die thermoplastische Zwischenschicht (5) aus der ersten Laminierfolie (5.1) und jeweils einer zweiten Laminierfolie (5.2) pro elektrisch schaltbarem Funktionselement (2), das in die Zwischenschicht (5) eingebracht ist, besteht und die unmittelbare Schichtenabfolge im Bereich des elektrisch schaltbaren Funktionselements (2) aus der ersten Scheibe (3), der zweiten Laminierfolie (5.2), dem elektrisch schaltbaren Funktionselement (2), der ersten Laminierfolie (5.1) und der zweiten Scheibe (4) besteht.

4. Verbundscheibe (1) nach Anspruch 1 oder 2, wobei die thermoplastische Zwischenschicht (5) aus der ersten Laminierfolie (5.1) und jeweils zwei zweiten Laminierfolien (5.2) pro elektrisch schaltbarem Funktionselement (2), das in die Zwischenschicht (5) eingebracht ist, besteht und die unmittelbare Schichtenabfolge im Bereich des elektrisch schaltbaren Funktionselements (2) aus der ersten Scheibe (3), einer zweiten Laminierfolie (5.2), dem elektrisch schaltbaren Funktionselement (2), einer weiteren zweiten Laminierfolie (5.2), der ersten Laminierfolie (5.1) und der zweiten Scheibe (4) besteht.

5. Verbundscheibe (1) nach einem der Ansprüche 1 bis 4, wobei die erste Laminierfolie (5.1) und die zweite Laminierfolie (5.2) Polyvinylbutyral (PVB), Ethylenvinylacetat (EVA) und/oder Polyurethan (PU) enthalten.

6. Verbundscheibe (1) nach einem der Ansprüche 1 bis 5, wobei die zweiten Laminierfolien (5.2) einen Weichmacheranteil von kleiner als 10 Gew.-%, besonders bevorzugt kleiner als 5 Gew.-% enthalten und bevorzugt im Wesentlichen weichmacherfrei sind.

7. Verbundscheibe (1) nach einem der Ansprüche 1 bis 6, wobei die zweiten Laminierfolien (5.2) eine Dicke von 10 µm bis 70 µm, bevorzugt von 40 µm bis 60 µm, insbesondere etwa 50 µm aufweisen und die erste Laminierfolie (5.1) eine Dicke von 0,30 mm bis 1,5 mm, bevorzugt 0,35 mm bis 1,0 mm, besonders bevorzugt 0,35 mm bis 0,8 mm aufweist.

8. Verbundscheibe (1) nach einem der Ansprüche 1 bis 7, wobei die zweiten Laminierfolien (5.2) 1 mm bis 5 mm, bevorzugt 1 mm bis 4 mm, insbesondere 2 mm bis 3 mm über das Funktionselement (2) hinausragen.

9. Verbundscheibe (1) nach einem der Ansprüche 1 bis 8, wobei der kapazitive Schaltbereich (7) einen Berührungsbereich (8), einen Zuleitungsbereich (9) und einen Anschlussbereich (10) aufweist, der Zuleitungsbereich (9) den Berührungsbereich (8) mit dem Anschlussbereich (10) elektrisch verbindet und der Anschlussbereich (10) mit einer Sensorelektronik elektrisch verbindbar ist.

10. Verbundscheibe (1) nach Anspruch 9, wobei der Flächenkapazitätsbelag c_{I} zwischen dem Berührungsbereich (8) und der außenseitigen Oberfläche (IV) der ersten Scheibe (3) größer ist als der Flächenkapazitätsbelag c_{A} zwischen dem Berührungsbereich (8) und der außenseitigen Oberfläche (I) der zweiten Scheibe (4).

11. Verfahren zur Herstellung einer Verbundscheibe (1) nach einem der Ansprüche 1 bis 10, wobei
a) ein elektrisch schaltbares Funktionselement (2) zwischen einer ersten Laminierfolie (5.1) und einer zweiten Laminierfolie (5.2)
oder
zwischen einer ersten Laminierfolie (5.1) und einer zweiten Laminierfolie (5.2) auf einer Seite und einer weiteren zweiten Laminierfolie (5.2) auf der gegenüberliegenden Seite eingebettet wird,
b) die in Schritt a) gebildete thermoplastische Zwischenschicht (5) mit Funktionselement (2) auf eine zweite Scheibe (4) aufgelegt wird,
c) der Schichtstapel mit einer ersten Scheibe (3) abgeschlossen wird,
d) der Schichtstapel aus in dieser Reihenfolge erster Scheibe (3), zweiter Laminierfolie (5.2), Funktionselement (2), optional einer weiteren zweiten Laminierfolie (5.2), erster Laminierfolie (5.1) und zweiter Scheibe (4) zu einer Verbundscheibe (1) laminiert wird.

12. Verfahren nach Anspruch 11, wobei vor Schritt b) eine elektrische Zuleitung elektrisch leitend mit dem Funktionselement (2) verbunden und aus der thermoplastischen Zwischenschicht (5) herausgeleitet wird.

13. Verwendung einer Verbundscheibe nach einem der Ansprüche 1 bis 10 als Fahrzeugverglasung, insbesondere Windschutzscheibe, Dachscheibe, Seitenscheibe oder Heckscheibe.

## Claims

1. Composite pane (1) with at least one electrically switchable functional element (2), at least comprising
- a first pane (3),
- a second pane (4),
- a thermoplastic intermediate layer (5) joining the first pane (3) to the second pane (4) and comprising a first laminating film (5.1) with a thickness of at least 0.3 mm and one or a plurality of second laminating films (5.2) with a thickness in each case of at most 70 µm, wherein the second laminating films (5.2) include a plasticizer content of less than 15 wt.-%, wherein
- the first laminating film (5.1) is inserted substantially areally between the first pane (3) and the second pane (4),
- the second laminating films (5.2) are inserted exclusively in the region of the at least one functional element (2) and protrude with an overhang x of at least 1 mm and at most 10 mm beyond the outer edges of the functional element (2),
- the direct layer sequence in the region of an electrically switchable functional element (2) consists of the first pane (3), the second laminating film (5.2), the electrically switchable functional element (2), optionally, a further second laminating film (5.2), the first laminating film (5.1), and the second pane (4), and
- the functional element has a thickness of at most 200 µm and has a share of the total area of the glazing of less than 10%, wherein the electrically switchable functional element (2) is a sensor and comprises a carrier film (6) with an electrically conductive coating (11) and at least one capacitive switching region (7) in the electrically conductive coating (11) is separated from the electrically conductive coating by at least one coating-free separating line (12).

2. Composite pane according to claim 1, wherein the direct layer sequence in the region of the field of vision of the composite pane, which lies outside the at least one electrically switchable functional element (2) or the functional elements (2) and outside the overhang x, consists of the first pane (3), the first laminating film (5.1), and the second pane (4).

3. Composite pane according to claim 1 or 2, wherein the thermoplastic intermediate layer (5) consists of the first laminating film (5.1) and in each case one second laminating film (5.2) per electrically switchable functional element (2) that is inserted into the intermediate layer (5), and the direct layer sequence in the region of the electrically switchable functional elements (2) consists of the first pane (3), the second laminating film (5.2), the electrically switchable functional element (2), the first laminating film (5.1), and the second pane (4).

4. Composite pane (1) according to claim 1 or 2, wherein the thermoplastic intermediate layer (5) consists of the first laminating film (5.1) and in each case two second laminating films (5.2) per electrically switchable functional element (2) that is inserted into the intermediate layer (5), and the direct layer sequence in the region of the electrically switchable functional element (2) consists of the first pane (3), a second laminating film (5.2), the electrically switchable functional element (2), a further second laminating film (5.2), the first laminating film (5.1), and the second pane (4).

5. Composite pane (1) according to one of claims 1 through 4, wherein the first laminating film (5.1) and the second laminating film (5.2) contain polyvinyl butyral (PVB), ethylene vinyl acetate (EVA), and/or polyurethane (PU).

6. Composite pane (1) according to one of claims 1 through 5, wherein the second laminating films (5.2) include a plasticizer content of less than 10 wt.-%, particularly preferably less than 5 wt.-%, and are preferably substantially plasticizer-free.

7. Composite pane (1) according to one of claims 1 through 6, wherein the second laminating films (5.2) have a thickness of 10 µm to 70 µm, preferably of 40 µm to 60 µm, in particular approx. 50 µm, and the first laminating film (5.1) has a thickness of 0.30 mm to 1.5 mm, preferably 0.35 mm to 1.0 mm, particularly preferably 0.35 mm to 0.8 mm.

8. Composite pane (1) according to one of claims 1 through 7, wherein the second laminating films (5.2) protrude 1 mm to 5 mm, preferably 1 mm to 4 mm, in particular 2 mm to 3 mm beyond the functional element (2).

9. Composite pane (1) according to one of claims 1 through 8, wherein the capacitive switching region (7) has a contact region (8), a supply line region (9), and a connection region (10); the supply line region (9) electrically connects the contact region (8) to the connection region (10); and the connection region (10) is electrically connectable to a sensor electronics system.

10. Composite pane (1) according to claim 9, wherein the surface capacitance c_{I} between the contact region (8) and the outer surface (IV) of the first pane (3) is greater than the surface capacitance c_{A} between the contact region (8) and the outer surface (I) of the second pane (4).

11. Method for producing a composite pane (1) according to one of claims 1 through 10, wherein
a) an electrically switchable functional element (2) is embedded between a first laminating film (5.1) and a second laminating film (5.2)
or
between a first laminating film (5.1) and a second laminating film (5.2) on one side and a further second laminating film (5.2) on the opposite side,
b) the thermoplastic intermediate layer (5) with a functional element (2) formed in step a) is placed on a second pane (4),
c) the layer stack is completed with a first pane (3),
d) the layer stack comprising, in this order, the first pane (3), the second laminating film (5.2), the functional element (2), optionally, a further second laminating film (5.2), the first laminating film (5.1), and the second pane (4) is laminated to form a composite pane (1).

12. Method according to claim 11, wherein before step b) an electrical supply line is electrically conductingly connected to the functional element (2) and is routed out of the thermoplastic intermediate layer (5).

13. Use of a composite pane according to one of claims 1 through 10 as a vehicle glazing, in particular a windshield, roof panel, side window, or rear window.

## Revendications

1. Vitrage composite (1) avec au moins un élément fonctionnel commutable électriquement (2), comprenant au moins
- une première vitre (3),
- une deuxième vitre (4),
- une couche intermédiaire thermoplastique (5) reliant la première vitre (3) au deuxième vitre (4) et comprenant un premier film de stratification (5.1) d'une épaisseur d'au moins 0,3 mm et un ou plusieurs seconds films de stratification (5.2) d'une épaisseur d'au plus 70 µm chacun, dans laquelle les seconds films de stratification (5.2) comprennent une teneur en plastifiant inférieure à 15 % en poids, dans laquelle
- le premier film de stratification (5.1) est inséré sensiblement dans l'axe entre la première vitre (3) et la deuxième vitre (4),
- les seconds films de stratification (5.2) sont insérés exclusivement dans la zone de l'élément fonctionnel (2) au moins et dépassent les bords extérieurs de l'élément fonctionnel (2) avec un débord x d'au moins 1 mm et d'au plus 10 mm,
- la séquence directe de couches dans la zone d'un élément fonctionnel commutable électriquement (2) est constituée de la première vitre (3), du second film de stratification (5.2), de l'élément fonctionnel commutable électriquement (2), éventuellement d'un second film de stratification supplémentaire (5.2), du premier film de stratification (5.1) et de la seconde vitre (4), et
- l'élément fonctionnel a une épaisseur maximale de 200 µm et représente moins de 10 % de la surface totale du vitrage, l'élément fonctionnel commutable électriquement (2) étant un capteur et comprenant un film support (6) avec un revêtement conducteur (11) et au moins une zone de commutation capacitive (7) dans le revêtement conducteur (11) étant séparée du revêtement conducteur par au moins une ligne de séparation sans revêtement (12).

2. Vitrage composite selon la revendication 1, dans lequel la séquence de couches directes dans la région du champ de vision du vitrage composite, qui se trouve à l'extérieur d'au moins un élément fonctionnel commutable électriquement (2) ou des éléments fonctionnels (2) et à l'extérieur du débord x, est constituée du premier vitrage (3), du premier film de stratification (5.1) et du deuxième vitrage (4).

3. Vitrage composite selon la revendication 1 ou 2, dans lequel la couche intermédiaire thermoplastique (5) est constituée du premier film de stratification (5.1) et, dans chaque cas, d'un second film de stratification (5. 2) par élément fonctionnel commutable électriquement (2) qui est inséré dans la couche intermédiaire (5), et la séquence de couches directes dans la région des éléments fonctionnels commutés électriquement (2) est constituée de la première vitre (3), du deuxième film de stratification (5.2), de l'élément fonctionnel commutable électriquement (2), du premier film de stratification (5.1), et de la deuxième vitre (4).

4. Vitrage composite (1) selon la revendication 1 ou 2, dans laquelle la couche intermédiaire thermoplastique (5) est constituée du premier film de stratification (5.1) et, dans chaque cas, de deux seconds films de stratification (5.2) par élément fonctionnel commutable électriquement (2) inséré dans la couche intermédiaire (5), et la séquence directe de couches dans la zone de l'élément fonctionnel commutable électriquement (2) comprend la première vitre (3), un deuxième film de stratification (5.2), l'élément fonctionnel commutable électriquement (2), un autre deuxième film de stratification (5.2), le premier film de stratification (5.1), et la deuxième vitre (4).

5. Vitrage composite (1) selon l'une des revendications 1 à 4, dans laquelle le premier film de stratification (5.1) et le second film de stratification (5.2) contiennent du butyral de polyvinyle (PVB), de l'éthylène-acétate de vinyle (EVA) et/ou du polyuréthane (PU).

6. Vitrage composite (1) selon l'une des revendications 1 à 5, dans lequel les seconds films de stratification (5.2) comprennent une teneur en plastifiant inférieure à 10 % en poids, de préférence inférieure à 5 % en poids, et sont de préférence substantiellement exempts de plastifiant.

7. Vitrage composite (1) selon l'une des revendications 1 à 6, dans lequel les seconds films de stratification (5.2) ont une épaisseur de 10 µm à 70 µm, de préférence de 40 µm à 60 µm, en particulier d'environ 50 µm, et le premier film de stratification (5.1) a une épaisseur de 0,30 mm à 1,5 mm, de préférence de 0,35 mm à 1,0 mm, de préférence encore de 0,35 mm à 0,8 mm.

8. Vitrage composite (1) selon l'une des revendications 1 à 7, dans lequel les seconds films de stratification (5.2) dépassent de 1 mm à 5 mm, de préférence de 1 mm à 4 mm, en particulier de 2 mm à 3 mm au-delà de l'élément fonctionnel (2).

9. Vitrage composite (1) selon l'une des revendications 1 à 8, dans laquelle la zone de commutation capacitive (7) comporte une zone de contact (8), une zone de ligne d'alimentation (9) et une zone de connexion (10), la zone de ligne d'alimentation (9) relie électriquement la zone de contact (8) à la zone de connexion (10), et la zone de connexion (10) peut être connectée électriquement à un système électronique de capteur.

10. Vitrage composite (1) selon la revendication 9, dans laquelle la capacité de surface c_{I} entre la zone de contact (8) et la surface extérieure (IV) de la première vitre (3) est supérieure à la capacité de surface c_{A}, entre la zone de contact (8) et la surface extérieure (I) de la deuxième vitre (4).

11. Procédé de fabrication d'un vitrage composite (1) selon l'une des revendications 1 à 10, dans lequel
a) un élément fonctionnel commutable électriquement (2) est inséré entre un premier film de stratification (5.1) et un second film de stratification (5.2)
ou
entre un premier film de stratification (5.1) et un second film de stratification (5.2) sur une face et un second film de stratification (5.2) sur la face opposée,
b) la couche intermédiaire thermoplastique (5) avec un élément fonctionnel (2) formée à l'étape a) est placée sur une deuxième vitre (4),
c) la pile de couches est complétée par une première vitre (3),
d) la pile de couches comprenant, dans cet ordre, la première vitre (3), le second film de stratification (5.2), l'élément fonctionnel (2), éventuellement un second film de stratification supplémentaire (5.2), le premier film de stratification (5.1) et la seconde vitre (4) est stratifiée pour former une vitrage composite (1).

12. Procédé selon la revendication 11, dans lequel, avant l'étape b), une ligne d'alimentation électrique est connectée par conduction électrique à l'élément fonctionnel (2) et est acheminée hors de la couche intermédiaire thermoplastique (5).

13. Utilisation d'une vitrage composite selon l'une des revendications 1 à 10 comme vitrage de véhicule, en particulier un pare-brise, un panneau de toit, une fenêtre latérale ou une lunette arrière.
